# EUROPÄISCHE PATENTSCHRIFT

(11) **EP 2 580 505 B1**
(45) Veröffentlichungstag und Bekanntmachung des Hinweises auf die Patenterteilung: **23.11.2016**
(21) Anmeldenummer: 11722058.2
(22) Anmeldetag: 26.05.2011
(51) Int. Cl.: F16K 15/14, F16K 31/08

(54) **MEMBRANVENTILANORDNUNG UND GERÄT MIT EINER SOLCHEN**
DIAPHRAGM VALVE ARRANGEMENT AND DEVICE THEREWITH
ENSEMBLE ROBINET À MEMBRANE ET APPAREIL ÉQUIPÉ D'UN TEL ENSEMBLE

(30) Priorität: 14.06.2010 DE 102010030045
(43) Veröffentlichungstag der Anmeldung: 17.04.2013
(73) Patentinhaber: BSH Hausgeräte GmbH, 81739 München (DE)
(72) Erfinder: BISCHOFF, Reinhard, 16547 Birkenwerder (DE); EGLMEIER, Hans, 10587 Berlin (DE)
(86) Internationale Anmeldenummer: PCT/EP2011/058655
(87) Internationale Veröffentlichungsnummer: WO 2011/157524

(56) Entgegenhaltungen:
- EP-A2- 0 202 505
- WO-A2-2010/091974
- DE-A1- 2 712 093
- DE-A1- 4 203 534
- FR-A1- 2 583 386
- US-A- 3 905 391
- US-A- 4 089 348
- US-A- 5 040 002
- US-A- 5 167 574

## Beschreibung

Die vorliegende Erfindung betrifft ein Haushaltsgerät, welches eine Membranventilanordnung aufweist, welche mit einer Membranfölie und mit einer Auflagefläche, bei der Membranfolie und Auflagefläche um einen scharnierartig wirkenden Bereich herum gegeneinander verschwenkbar ausgebildet sind.

Eine solche, allgemein bekannte Membranventilanordnung wird meist einem Medium wie z. b. einer Flüssigkeit oder einem Gas oder auch Feststoffteilchen wie z. B. Granulat ausgesetzt, das durch eine durch die Auflagefläche lateral begrenzte Fläche innerhalb eines Bereichs der Auflagefläche hindurchströmen will, wobei ein Rückfluss des Mediums unterbunden werden soll. Damit eine solche Membranventilanordnung ihren Zweck auch zuverlässig erfüllen kann, ist sie häufig, aber nicht immer, innerhalb eines Gehäuses angeordnet, das einen Zulauf und einen Ablauf für die durch die Membranventilanordnung zu transportierenden Medien aufweist. Weitere, verschiedene Einsatzmöglichkeiten solcher Membranventilanordnungen sind bekannt.

Nachteil dieser bekannten Membranventilanordnung ist, dass sie ausschließlich nach der Methode "auf - zu" funktioniert, ohne dass man bei ihrer Konstruktion irgendwelche Einflussmöglichkeiten hätte dergestalt, die Wirkungsweise der "auf"- bzw. "zu"-Funktion beeinflussen zu können.

Beispielsweise sind aus DE 2712093 A1 und EP 202505 A auch Haushaltsgeräte in Form von Waschmaschinen bekannt, welche zum Verschließen des Laugenbehälters eine Membranventilanordnung umfasst.

Es ist Aufgabe der vorliegenden Erfindung, Geräte anzugeben, die einem Betreiber der Haushaltsgeräte die Nutzung der Möglichkeiten einer Membranventilanordnung, welche ihr Öffnungs- bzw. Schließverhalten bereits durch konstruktive Maßnahmen beeinflusst bzw. bestimmt werden kann, ermöglichen.

Diese Aufgabe wird bei einem gattungsgemäßen Haushaltsgerät durch die kennzeichnenden Merkmale des unabhängigen Patentanspruchs gelöst. Vorteilhafte Aus- und Weiterbildungen sind in abhängigen Patentansprüchen gekennzeichnet.

Das erfindungsgemäße Haushaltsgerät weist eine Membranventilanordnung mit einer Auflagefläche und einer Membranfolie auf, bei der Auflagefläche und Membranfolie schwenkbar miteinander verbunden sind, wobei die Membranventilanordnung sich somit dadurch auszeichnet, dass sowohl die Auflagefläche als auch die Membranfolie ferromagnetische Eigenschaften aufweisen, und wobei bei der Auflagefläche und/oder bei der Membranfolie die ferromagnetische Eigenschaft gleichzeitig eine permanentmagnetische Eigenschaft ist.

Ferner ist die Membranventilanordnung, d. h., die Membranfolie mit Auflagefläche, einstückig ausgeführt.

Weiterhin ist es vorteilhaft, wenn die Membranfolie als eine in sich flexible Membranfolie ausgeführt ist, beispielsweise in sich beweglich.

Eine bevorzugte Weiterbildung der Membranventilanordnung zeichnet sich dadurch aus, dass in einem Fall, in dem sowohl die Auflagefläche wie auch die Membranfolie die permanentmagnetische Eigenschaft aufweisen, in geschlossenem Zustand von Auflagefläche und Membranfolie den magnetischen Nordpolen der Auflagefläche entweder die magnetischen Südpole der Membranfolie gegenüberliegen oder dass ihnen die magnetischen Nordpole der Membranfolie gegenüberliegen.

Eine andere bevorzugte Weiterbildung der Membranventilanordnung zeichnet sich dadurch aus, dass sie weiterhin eine mit elektrischem Strom beaufschlagbare Spule aufweist, die so angeordnet ist, dass das in bestromtem Zustand von ihr erzeugte Magnetfeld die Auflagefläche und die Membranfolie magnetisch beeinflusst.

Eine weitere bevorzugte Weiterbildung der Membranventilanordnung zeichnet sich dadurch aus, dass sie weiterhin entweder ein elektromagnetisches Flächenelement oder ein ferromagnetisches Flächenelement aufweist, insbesondere ein permanentmagnetisches Flächenelement, das auf einer von der Membranfolie abgewandten Seite der Auflagefläche angeordnet ist, mit der Auflagefläche zumindest mittelbar verbunden ist und das sich entlang der Auflagefläche in einem gegebenen Winkel von der Auflagefläche weg erstreckt. Besonders bevorzugt ist es dabei, dass die zumindest mittelbare Verbindung von Flächenelement und Auflagefläche im scharnierartig wirkenden Bereich der Membranventilanordnung angeordnet ist. Alternativ dazu ist es ebenfalls besonders bevorzugt, dass die zumindest mittelbare Verbindung von Flächenelement und Auflagefläche in einem Bereich gegeben ist, der dem scharnierartig wirkenden Bereich der Membranventilanordnung lateral entgegengesetzt ist.

Noch eine bevorzugte Weiterbildung der Membranventilanordnung zeichnet sich dadurch aus, dass die ferromagnetische Eigenschaft von Auflagefläche und/oder Membranfolie und/oder ferromagnetischem Flächenelement durch Einlagerung von ferromagnetischen Partikeln in ein ansonsten nicht ferromagnetisches Material realisiert ist. Dabei ist es weiter bevorzugt, dass die ferromagnetischen Partikel von einem Ende zum anderen Ende der Auflagefläche und/oder der Membranfolie und/oder des ferromagnetischen Flächenelements in ihrer räumlichen Konzentration linear und/oder nicht-linear zunehmen.

Noch eine weitere bevorzugte Weiterbildung der Membranventilanordnung zeichnet sich dadurch aus, dass sie in einem Gehäuse angeordnet ist, das einen Zulauf und einen Ablauf für ein flüssiges oder ein gasförmiges Medium aufweist oder für ein Medium aus Festkörperteilchen.

Das erfindungsgemäße Haushaltsgerät, zeichnet sich dadurch aus, dass es eine Membranventilanordnung gemäß den vorstehend beschriebenen Ausprägungen aufweist.

Eine bevorzugte Weiterbildung des erfindungsgemäßen Haushaltsgeräts zeichnet sich dadurch aus, dass die Membranventilanordnung als Überdruckventil, als Rückschlagventil oder als Durchflussmengenbegrenzungsventil verwendet ist.

Nachstehend werden Ausführungsbeispiele der Erfindung anhand der Zeichnung näher erläutert. Dabei zeigen:
- Fig. 1A: eine erste nicht erfindungsgemäße Ausführungsform der Membranventilanordnung in seitlicher Ansicht bzw. Schnittdarstellung,
- Fig. 1B: deren Auflagefläche in Draufsicht,
- Fig. 2: eine zweite nicht erfindungsgemäße Ausführungsform der Membranventilanordnung in seitlicher Ansicht, geschnitten.
- Flg. 3A bis 3D: verschiedene nicht erfindungsgemäße Ausführungsformen von Auflageflächen, in Draufsicht,
- Fig. 4 bis 6: schematische Darstellungen verschiedener Anwendungsmöglichkeiten der Membranventilanordnung, und
- Fig. 7 bis 9: weitere vorteilhafte Ausführungsformen.

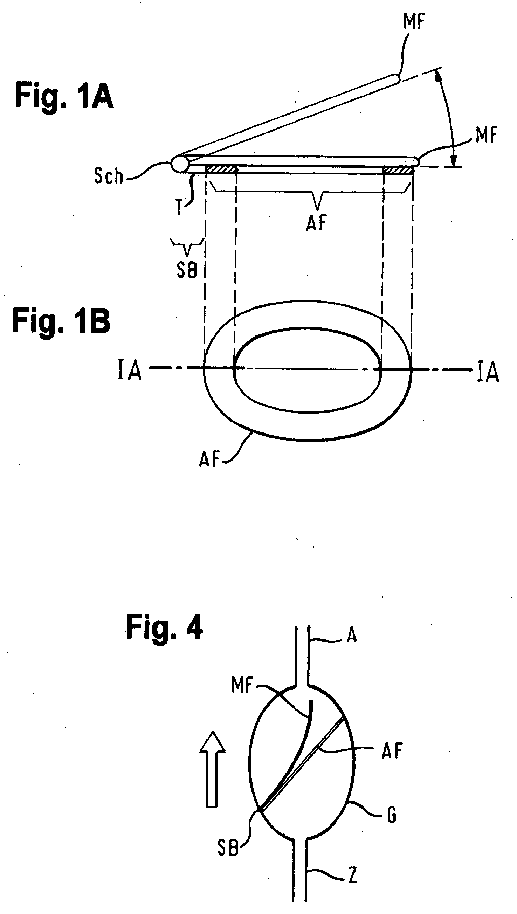

Fig. 1 zeigt in den Teilfiguren 1A und 1B In einer ersten Ausführungsform grob schematisiert den prinzipiellen Aufbau einer Membranventilanordnung mit einer Auflagefläche AF und mit einer Membranfolie MF, die in einem scharnierartig wirkenden Bereich SB schwenkbar miteinander verbunden sind. Während die Fig. 1B die Auflagefläche AF in Draufsicht zeigt, zeigt die Fig. 1A die gesamte Membranventilanordnung in seitlicher Ansicht, wobei die Auflagefläche AF lediglich im Querschnitt dargestellt ist, geschnitten entlang einer Schnittlinie IA, wie in Fig. 1B gezeigt. Die Membranfolie MF ist schwenkbar mit der Auflagefläche AF verbunden. Dies kann auf mehrere, verschiedene Arten bewerkstelligt sein. Bei der in den Teilfiguren 1A und 1B gewählten Ausgestaltung der Membranventilanordnung, die hier mehrstückig ausgeführt ist, ist dies so bewerkstelligt, dass sich, in Blickrichtung auf die Fig. 1A betrachtet, links an die Auflagefläche AF ein Teil T anschließt, das dann wiederum in Wirkverbindung mit einem Scharnier Sch steht. Somit lässt sich die Membranfolie MF im scharnierartig wirkenden Bereich SB um das Scharnier Sch herum gegenüber der Auflagefläche AF samt Teil T drehbar bewegen, d. h., schwenken. Selbstverständlich sind hier auch andere Lösungen vorstellbar wie z. B. eine unmittelbare Verbindung der Auflagefläche AF mit dem Scharnier Sch.

Die Membranfolie MF selbst, in der Ausführungsform nach den Fig. 1A und 1B, kann elastisch oder (ggf. auch teil-)starr ausgebildet sein. Sie lässt sich mittels des Scharniers Sch gegenüber der Auflagefläche AF drehbar bewegen.

Alternativ zu dieser Verbindung zwischen Auflagerfläche AF und Membranfolie MF mittels Scharnier Sch ist beispielsweise auch eine Verbindung mittels einer flexiblen Lasche oder Ähnlichem vorstellbar, so dass die Membranventilanordnung insgesamt einstückig ausgeführt wäre (in der Zeichnung nicht dargestellt).. Vorliegend weisen erfindungsgemäß sowohl die Auflagefläche AF als auch die Membranfolie MF ferromagnetische Eigenschaften auf. Als ferromagnetische Eigenschaft wird dabei eine solche magnetische Eigenschaft verstanden wie sie z. B. die Elemente Eisen, Nickel und Kobalt aufweisen. Diese Elemente beinhalten bekanntlich magnetische Dipole, die sich bei Anlegen eines externen magnetischen Feldes in eine gegebene Richtung hin ausrichten und diese Ausrichtung, sofern nicht der Sonderfall des Permanentmagnetismus vorliegt (wird nachstehend noch erläutert), nach Entfernen (bzw. Abschalten im Falle von elektrisch erzeugtem Magnetfeld) dieses Magnetfeldes wieder verlieren, abgesehen von einem kleinen, verbleibenden restlichen Magnetismus ("Remanenz"). Ein Sonderfall von Ferromagnetismus ist nun der sog. Permanentmagnetismus. Bei permanentmagnetischen Stoffen nehmen bekanntlich die vorstehend bereits erwähnten magnetischen Dipole (beim Vorgang des Magnetisierens) in Abhängigkeit von einem extern angelegten Magnetfeld eine gegebene Richtung ein und behalten diese Richtung, im Gegensatz zu "normalen" ferromagnetischen Stoffen, nach Entfernen bzw. Abschalten dieses Magnetfeldes auch bei; zumindest bis zur Vornahme einer Ummagnetisierung oder Vornahme einer sog. Entmagnetisierung,

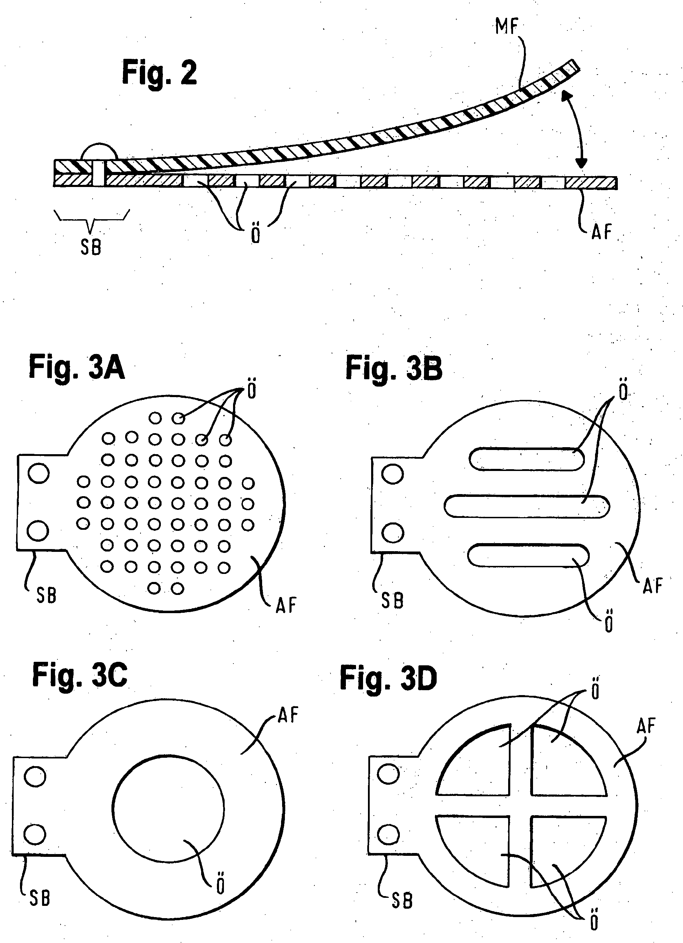

Die Fig. 2 zeigt eine zweite vorteilhafte Ausführungsform der Membranventilanordnung in seitlichem Querschnitt. Die Membranfolie MF ist dabei als eine flexible, elastische, beispielsweise gummiartige Folie ausgeführt, während die Auflagefläche AF eine starre Scheibe mit wenigstens einer Öffnung Ö, vorzugsweise einer Mehrzahl von Öffnungen Ö, ist. Im gemeinsamen Schwenkbereich SB, um den herum sich die Membranfolie MF und die Auflagefläche AF gegeneinander verschwenken lassen, sind die Membranfolie MF und die Auflagefläche AF miteinander verbunden, beispielsweise mittels nieten, kleben, knöpfen etc.. Im geschlossenen Zustand der Membranventilanordnungliegt die Membranfolie MF wegen der herrschenden magnetischen Kräfte dichtend an der Auflagefläche AF an. Die Fig. 3A bis 3D zeigen, in Draufsicht, verschiedene mögliche Ausführungsformen von Auflageflächen AF mit verschieden gestalteten Öffnungen Ö zum Passieren eines Mediums in dem Fall, in dem die Membranventilanordnung geöffnet ist.

Bei beiden Ausführungsformen weist entweder die Auflagefläche AF oder die Membranfolie MF eine permanentmagnetische Eigenschaft auf. Wenn man nun beispielsweise annimmt, dass die Auflagefläche AF permanentmagnetisch sei, nicht jedoch die Membranfolie MF, dann zieht die Auflagefläche AF in dem Fall, in dem die Membranfolie MF in den Wirkungsbereich des von der Auflagefläche AF ausgehenden Magnetfeldes gelangt, die Membranfolie MF an; die Membranfolie MF liegt dichtend an der Auflagefläche AF an. Diese Wirkung kann man nun zu vielerlei Zwecken ausnützen, von denen in den nachstehend beschriebenen Figuren einige aufgezeigt sind. Der umgekehrte Fall, nämlich dass die Membranfolie MF permanentmagnetisch ist und nicht die Auflagefläche AF, ist hierbei ebenso gut vorstellbar.

Bei der Anwendung nach Fig. 4 sind Auflagefläche AF und Membranfolie MF innerhalb eines Gehäuses G angeordnet, das einen Zulauf Z und einen Ablauf A aufweist. Diese Anordnung kann in einer ersten Ausgestaltung sowohl als ein Überdruckventil als auch, bei Vertauschen von Zulauf Z und Ablauf A, als Rückschlagventil verwendet werden: bei Verwendung als Überdruckventil wird ein Medium wie z. B. ein Festkörpermedium (beispielsweise ein feinkörniges Granulat) oder ein flüssiges Medium (wie z. B. Wasch- oder Spülwasser) oder ein gasförmiges Medium über den Zulauf Z der Membranventilanordnung in Pfeilrichtung (= Fließrichtung) zugeführt. Dadurch baut sich an der Membranfolie MF ein Druck auf, der auf diese eine Kraft ausübt. Solange diese Kraft geringer (oder maximal gleich) ist wie die magnetische Anziehungskraft, die zwischen Auflagefläche AF und Membranfolie MF herrscht, wird die Membranfolie MF (und somit das Überdruckventil) geschlossen bleiben, da die Membranfolie MF nicht von der Auflagefläche AF abheben wird. Wird jedoch der Druck erhöht, erhöht sich auch die auf die Membranfolie MF wirkende, durch das Medium ausgeübte Kraft mit der Wirkung, dass die Membranfolie MF von der Auflagefläche AF abhebt. Dies ist die klassische Funktion eines Überdruckventils, d. h., die Membranventilanordnung ist als Überdruckventil verwendbar.

Dieselbe Anordnung wirkt aber auch als Rückschlagventil: wenn nämlich der Druck unter den vorgenannten Wert, bei dem die Membranfolie MF von der Auflagefläche AF abhebt, fällt, wird die o. g., auf die Membranfolie MF wirkende, magnetische Anziehungskraft überwiegen und die Membranfolie MF auf die Auflagefläche AF ziehen: das Rückschlagventil ist dichtend verschlossen. Derselbe Effekt tritt ein, wenn die Fließrichtung des Mediums umgedreht wird. Damit lässt sich z. B. ein unerwünschter Rückfluss eines Mediums verhindern.

Die Anordnung nach Fig. 4 lässt sich aber auch in einer zweiten und in einer dritten Ausgestaltung verwenden, nämlich dahingehend, dass in der zweiten wie auch in der dritten Ausgestaltung sowohl die Auflagefläche AF als auch die Membranfolie MF permanentmagnetisch sind. Bei der zweiten Ausgestaltung sind Auflagefläche AF und Membranfolie MF so ausgebildet, dass die Nordpole der Auflagefläche AF den Südpolen der Membranfolie MF gegenüberliegen. Dadurch verstärken sich die zwischen Auflagefläche AF und Membranfolie MF herrschenden Anziehungskräfte im Vergleich zur ersten Ausgestaltung (gleiche Dimensionierung bei der Permanentmagnetisierung unterstellt), bei der entweder nur die Auflagefläche AF oder nur die Membranfolie MF permanentmagnetisch ist. Dies lässt sich bei Verwendung der zweiten Ausgestaltung als Überdruckventil dahingehend ausnützen, dass die Membranfolie MF erst bei einem höheren Druck des Mediums öffnet als (bei ansonsten gleicher Dimensionierung) bei der ersten Ausgestaltung. Entsprechend früher schließt die Membranventilanordnung gemäß der zweiten Ausgestaltung bei ihrer Verwendung als Rückschlagventil auch bereits bei einem geringeren Druckabfall als bei der ersten Ausgestaltung.

Die dritte Ausgestaltung unterscheidet sich von der zweiten Ausgestaltung dadurch, dass sich hier die Nordpole sowohl von Auflagefläche AF als auch der Membranfolie MF gegenüberliegen, was ja bekanntlich einander abstoßende Kräfte erzeugt. Diese Ausgestaltung kann als Rückschlagventil verwendet werden, das zunächst ein gegebenes Ausmaß an Rückfluss eines durchfließenden Mediums zulässt, aber bei Überschreiten des Drucks des zurückfließenden Mediums dann doch schließt. Es wirkt also wie ein Druckbegrenzer in dem Sinne, dass ein Medium mit einem Fließdruck unterhalb eines gegebenen Grenzdrucks ungehindert die Membranventilanordnung in "rückwärtiger" Richtung, d. h., entgegen der durch den Pfeil in Fig. 4 angegebenen Richtung, passieren kann, dass aber bei zunehmendem Überschreiten dieses Grenzdrucks die Membranventilanordnung zunehmend mehr schließt bis zum vollständigen Unterbinden eines Durchflusses so dass wiederum die echte Wirkung eines Rückschlagventils vorliegt. Bei einem Betreiben der in der Fig. 4 gezeigten Anordnung nach der dritten Ausgestaltung, bei der, im Gegensatz zum zuvor unterstellten, die Fließrichtung des Mediums gleich dem durch den in Fig. 4 angegebenen Pfeil ist, ist ein Durchfluss durch die Membranventilanordnung stets gegeben.

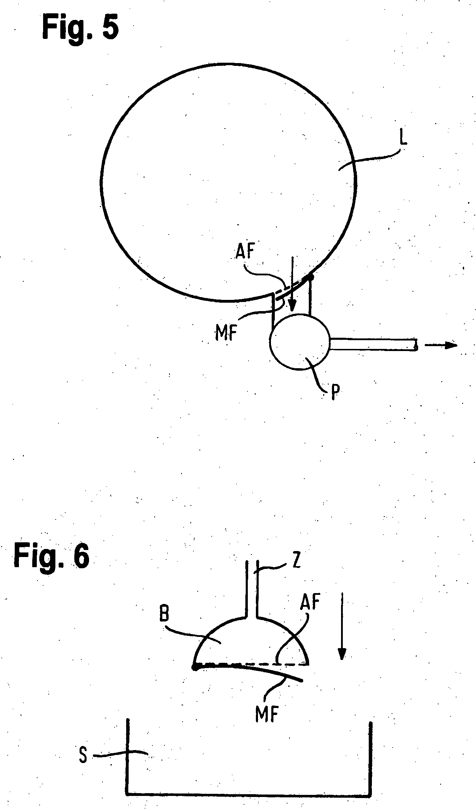

Während die Fig. 4 eine Membranventilanordnung zeigt, die je nach gewählter Fließrichtung des Mediums bzw. je nach dessen gewählter Durchflussgröße (die ja proportional zum Druck ist, unter dem das Medium steht) entweder als Überdruckventil oder als Rückschlagventil oder als Durchflussminderer einsetzen lässt, zeigen die Fig. 5 und 6 vorteilhafte Anwendungsmöglichkeiten der Membranventilanordnung, wenn diese in Geräte eingebaut ist, insbesondere in Haushaltsgeräte wie Waschmaschine, Wäschetrockner, Waschtrockner (= Kombination von Waschmaschine und Wäschetrockner) oder Geschirrspülmaschine. Dabei sei jeweils angenommen, dass die magnetischen Verhältnisse denen der ersten oder der zweiten Ausgestaltung entsprechen.

Fig. 5 zeigt als Beispiel einen Laugenbehälter L einer Waschmaschine oder eines Waschtrockners, der üblicherweise in Abhängigkeit von einem gewählten Waschprogramm zunächst mit Waschlauge gefüllt wird und dann später mittels einer Laugenpumpe P entleert werden soll. Bis zum Beginn des Entleerens ist die Laugenpumpe P außer Betrieb; die Membranventilanordnung mit Auflagefläche AF und Membranfolie MF bleibt aufgrund der herrschenden magnetischen Anziehungskraft geschlossen. Wenn die Laugenpumpe P eingeschaltet wird, baut sie einen Unterdruck auf, der auf die Magnetfolie MF wirkt und gegen die dort bestehende magnetische Anziehungskraft zwischen Auflagefläche AF und Magnetfolie MF wirkt. Wenn dann irgendwann die vom (größer werdenden) Unterdruck ausgehende Kraft größer wird als die magnetische Anziehungskraft, öffriet die Membranventilanordnung und der Laugenbehälter L wird entleert. Vorteil dieser Anordnung ist: die genannte magnetische Anziehungskraft der Membranventilanordnung hält im Zeitraum vor dem Abpumpen den Laugenbehälter L dicht und schützt so zuverlässig vor einem Auslaufen, auch z. B. bei einem plötzlichen Stromausfäll, was bestehenden Sicherheitsvorschriften sehr entgegenkommt. Diesbezüglich beim Stand der Technik bereits realisierte andere Schutzmaßnahmen, die teilweise auch vom jeweiligen Gesetzgeber gefordert werden und die in jedem Fall hohen Herstellungsaufwand (und somit Kosten) verursachen, können mittels dieser vorstehend offenbarten Ausgestaltung konstruktiv einfacher und kostengünstig ersetzt werden.

Fig. 6 zeigt eine Anwendungsmöglichkeit einer Membranventilanordnung in einem Gerät wie z B. einem Wäschetrockner oder einer Waschtrockenkombination: hierbei werden während eines Trocknungsvorgangs einem Waschgut entzogene Flüssigkeit (üblicherweise Wasser), die naturgemäß noch Flusen und ggf. weitere Feststoffe enthält, in einem Behälter B gesammelt. Aufgrund der magnetischen Kräfteverhältnisse bleibt die Membranventilanordnung geschlossen. Wenn dann, beispielsweise mittels einer nicht dargestellten Pumpe, über den Zulauf Z ein höherer Druck auf die Flüssigkeit samt Flusen ausgeübt wird mit dem Ziel, den Behälter B schlagartig in einen Sammelbehälter S zu entleeren, öffnet die Membranventilanordnung bei Erreichen eines gegebenen Druckwerts und entlässt die gesamte Flüssigkeit samt Flusen in den Sammelbehälter S, ohne Rückstände im Behälter B und/oder an der Auflagefläche AF zu hinterlassen. Auflagefläche AF und Membranfolie MF sind anschließend wieder dicht verschlossen.

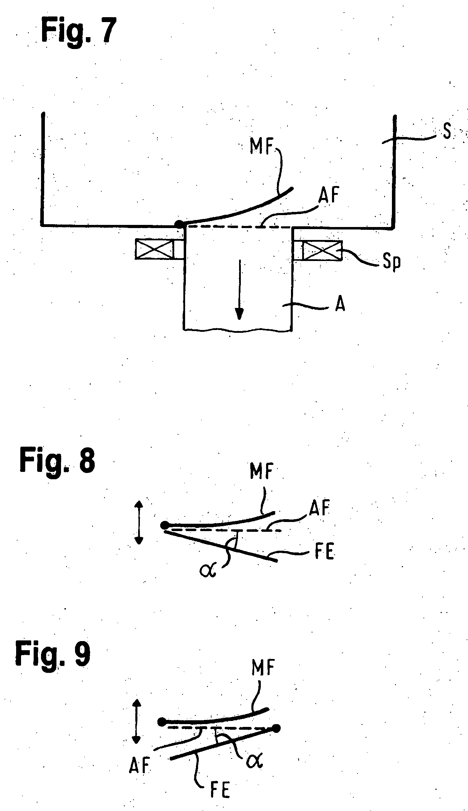

Fig. 7 zeigt eine weitere vorteilhafte Ausführungsform. Dabei ist wiederum angenommen, dass sich in einem Haushaltsgerät während dessen Betriebs in einem Sammelbehälter S Schmutzwasser, flusenhaltiges Wasser o. ä. ansammelt. Wenn, wie bei den vorstehend bereits beschriebenen ersten und zweiten Ausgestaltungen angenommen, Auflagefläche AF und Membranfolie MF in ihren magnetischen Eigenschaften so ausgelegt sind, dass sie sich gegenseitig anziehen, ist der Sammelbehälter S im Normalfall durch die Membranventilanordnung verschlossen. Bei der Ausführungsform nach Fig. 7 ist nun um den Ablauf A herum eine bestrombare Spule Sp, insbesondere eine Ringspule, angeordnet. Wenn dann der Sammelbehälter S entleert werden soll, wird der Spule Sp elektrischer Strom geeigneter Polarität und Stärke zugeführt. Das dadurch entstehende zusätzliche Magnetfeld bewirkt ein Abheben der Membranfolie MF von der Auflagefläche AF; der Sammelbehälter S entleert sich in der mittels des Pfeils angegebenen Richtung.

Bei den in den Fig. 8 und 9 gezeigten weiteren Ausführungsformen ist auf der von der Membranfolie MF abgewandten Seite der Auflagefläche AF ein in sich starres, ferromagnetisches Flächenelement FE, das ggf. auch ringförmig, oval, o. ä. ausgestaltet sein kann, in einem gegebenen Winkel α zur Auflagefläche AF hin angeordnet. Das Flächenelement FE kann auch permanentmagnetisch einer gegebenen Polarität sein. Das Flächenelement FE ist mit der Auflagefläche AF zumindest mittelbar (z. B. über ein weiteres Mittel) starr oder über eine Achse schwenkbar verbunden. In der Ausführungsform nach Fig. 8 ist diese Verbindung auf derselben Seite der Auflagerfläche AF angeordnet, auf der sich auch die Verbindung der Auflagefläche AF mit der Membranfolie MF befindet. In der Ausführungsform nach Fig. 9 ist diese Verbindung auf einer Seite der Auflagefläche AF angeordnet, die dem Bereich, in dem die Auflagefläche AF und die Membranfolie MF miteinander verbunden sind, lateral gegenüber liegt.

Wären nun die Ausführungsformen nach den Fig. 8 und 9 ohne diese Flächenelemente FE ausgeführt, so würden sie, je nach der durch den jeweiligen (Doppel-)Pfeil angedeuteten Fließrichtung des Mediums, als Überdruckventil oder Rückschlagventil agieren, wie zuvor bereits ausführlich beschrieben. Durch die magnetische Eigenschaft des Flächenelements FE und dessen Einfluss auf Auflagefläche AF und Membranfolie MF lassen sich nun aber das Öffnungs- und Schließverhalten von Membranfolie MF und Auflagefläche AF zusätzlich beeinflussen, insbesondere durch geeignete Wahl des Winkels a und durch Wahl der Seite der Auflagefläche AF, auf der das Flächenelement FE mit der Auflagefläche AF verbunden ist. Letztendlich lässt sich damit sogar die Durchflussmenge des Mediums durch die Auflagefläche AF beeinflussen.

Es ist auch vorteilhaft, das Flächenelement FE in Alternative zur zuvor beschriebenen ferromagnetischen Ausführung als Elektromagneten auszugestalten. Durch das damit erzeugbare Magnetfeld in unterschiedlichen Stärken und Polarisationsrichtungen bestehen weitere Einflussmöglichkeiten auf das Öffnungs- und Schließverhalten der Anordnung.

Welterhin ist es bei den Ausführungsformen nach den Fig. 8 und 9 auch möglich, die Auflagerfläche AF, entgegen den bisherigen Ausführungen, aus einem nicht-magnetischen Material zu gestalten.

Es ist auch vorteilhaft, da z. B. unter Umständen Kosten senkend bei der Herstellung, die Auflagefläche AF und/oder die Membranfolie MF und/oder das ferromagnetische Flächenelement FE aus einem Material zu gestalten, das als solches nicht ferromagnetisch ist, jedoch Einlagerungen von ferromagnetischen Partikeln aufweist, deren räumliche Konzentration entweder gleichmäßig verteilt ist oder die von einem Ende der Auflagefläche AF bzw. der Membranfolie MF bzw. des Flächenelements FE zum jeweiligen anderen Ende hin linear und/oder nicht-linear zunimmt.

### Bezugszeichenliste

- MF: Membranfolie
- AF: Auflagefläche
- SB: scharnierartig wirkender Bereich
- Ö: Öffnung(en)
- Sp: Spule
- FE: Flächenelement
- G: Gehäuse
- Z: Zulauf
- A: Ablauf
- Sch: Scharnier
- T: Teil

## Patentansprüche

1. Haushaltsgerät, insbesondere in Form einer Waschmaschine, eines Wäschetrockner, eines Waschtrockners oder einer Geschirrspülmaschine, welches eine Membranventilanordnung mit einer Membranfolie (MF) und mit einer Auflagefläche (AF) für die Membranfolie (MF) aufweist, bei der die Membranfolie (MF) und die Auflagefläche (AF) um einen scharnierartig wirkenden Bereich (SB) der Membranventilanordnung herum so gegeneinander verschwenkbar ausgebildet sind, dass sie sowohl einen abgedichteten Zustand als auch einen geöffneten Zustand der Membranventilanordnung einnehmen können, **dadurch gekennzeichnet, dass** die Membranfolie (MF) mit der Auflagefläche (AF) einstückig ausgeführt ist und dass sowohl die Membranfolie (MF) als auch die Auflagefläche (AF) ferromagnetische Eigenschaften aufweisen, wobei bei der Membranfolie (MF) und/oder bei der Auflagefläche (AF) die ferromagnetische Eigenschaft gleichzeitig eine permanentmagnetische Eigenschaft ist.

2. Haushaltsgerät nach Anspruch 1, **dadurch gekennzeichnet, dass** die Membranfolie (MF) eine in sich flexible Membranfolie (MF) ist.

3. Haushaltsgerät nach einem der vorhergehenden Ansprüche, **dadurch gekennzeichnet, dass** in einem Fall, in dem sowohl die Membranfolie (MF) wie auch die Auflagefläche (AF) die permanentmagnetische Eigenschaft aufweisen, im abgedichteten Zustand der Membranventilanordnung den magnetischen Nordpolen der Auflagefläche (AF) entweder die magnetischen Südpole der Membranfolie (MF) gegenüberliegen oder dass ihnen die magnetischen Nordpole der Membranfolie (MF) gegenüberliegen.

4. Haushaltsgerät nach einem der vorhergehenden Ansprüche, **dadurch gekennzeichnet, dass** die Membranventilanordnung weiterhin eine mit elektrischem Strom beaufschlagbare Spule (Sp) aufweist, die so angeordnet ist, dass das in bestromtem Zustand von ihr erzeugte Magnetfeld die Membranfolie (MF) und die Auflagefläche (AF) magnetisch beeinflusst.

5. Haushaltsgerät nach einem der vorhergehenden Ansprüche, **dadurch gekennzeichnet, dass** die Membranventilanordnung weiterhin entweder ein elektromagnetisches Flächenelement (FE) oder ein ferromagnetisches Flächenelement (FE) aufweist, insbesondere ein permanentmagnetisches Flächenelement (FE), das auf einer von der Membranfolie (MF) abgewandten Seite der Auflagefläche (AF) angeordnet ist, das mit der Auflagefläche (AF) zumindest mittelbar verbunden ist und das sich entlang der Auflagefläche (AF) in einem gegebenen Winkel (α) von der Auflagefläche (AF) weg erstreckt.

6. Haushaltsgerät nach Anspruch 5, **dadurch gekennzeichnet, dass** die zumindest mitttelbare Verbindung von Flächenelement (FE) und Auflagefläche (AF) im schamierartig wirkenden Bereich (SB) angeordnet ist.

7. Haushaltsgerät nach Anspruch 5, **dadurch gekennzeichnet, dass** die zumindest mittelbare Verbindung von Flächenelement (FE) und Auflagefläche (AF) in einem zum scharnierartig wirkenden Bereich (SB) entgegengesetzten Bereich angeordnet ist.

8. Haushaltsgerät nach einem der vorhergehenden Ansprüche, **dadurch gekennzeichnet, dass** die ferromagnetische Eigenschaft von Auflagefläche (AF) und/oder Membranfolie (MF) und/oder ferromagnetischem Flächenelement (FE) durch Einlagerung von ferromagnetischen Partikeln in ein ansonsten nicht ferromagnetisches Material realisiert ist.

9. Haushaltsgerät nach Anspruch 8, **dadurch gekennzeichnet, dass** die ferromagnetischen Partikel lateral von einem Ende in Richtung zum anderen Ende der Auflagefläche (AF) und/oder der Membranfolie (MF) und/oder des ferromagnetischen Flächenelements (FE) in ihrer räumlichen Konzentration linear und/oder nicht-linear zunehmen.

10. Haushaltsgerät nach einem der vorhergehenden Ansprüche, **dadurch gekennzeichnet, dass** die Membranventilanordnung in einem Gehäuse (G) angeordnet ist, das einen Zulauf (Z) und einen Ablauf (A) für ein flüssiges oder ein gasförmiges Medium aufweist oder für ein Medium aus Festkörperteilchen.

11. Haushaltsgerät nach einem der vorhergehenden Ansprüche, **dadurch gekennzeichnet, dass** die Membranventilanordnung als Überdruckventil, als Rückschlagventil oder als Durchflussmengenbegrenzungsventil verwendet ist.

12. Haushaltsgerät einem der vorhergehenden Ansprüche, **dadurch gekennzeichnet, dass** das Haushaltsgerät als Waschmaschine oder Waschtrockner ausgebildet ist und einen Laugenbehälter (L) und eine Pumpe (P) zum Entleeren des Laugenbehälters (L) umfasst, wobei der Laugenbehälter (L) bis zum Entleeren desselben die Membranventilanordnung mit der Auflagefläche (AF) und Membranfolie (MF) aufgrund der herrschenden magnetischen Anziehungskraft geschlossen hält.

13. Haushaltsgerät einem der vorhergehenden Ansprüche, **dadurch gekennzeichnet, dass** das Haushaltsgerät als Wäschetrockner oder Waschtrockenkombination ausgebildet ist, einen Behälter (B) zum Sammeln von während eines Trocknungsvorgangs entzogener Flüssigkeit, die Flusen enthält, eine über einen Zulauf (Z) mit dem Behälter (B) verbundenen Pumpe und einen weiteren Sammelbehälter (S) umfasst, wobei an dem Behälter die Membranventilanordnung vorgesehen ist, welche den Behälter aufgrund der magnetischen Kraftverhältnisse geschlossen hält und weiche den Behälter (B) öffnet, um die darin enthaltene Flüssigkeit schlagartig in den weiteren Sammelbehälter zu entleeren, wenn die Pumpe über den Zulauf (Z) auf die Flüssigkeit einen höheren Druck ausübt und dieser Druck einen gegebenen Druckwert erreicht.

## Claims

1. Domestic appliance, in particular in the form of a washing machine, a tumble dryer, a washer-dryer or a dishwasher, which has a membrane valve arrangement with a membrane film (MF) and with a contact surface (AF) for the membrane film (MF), in which the membrane film (MF) and the contact surface (AF) are embodied to be pivotable with respect to one another about a region (SB) of the membrane valve arrangement acting as a hinge, such that they can assume both a sealed state as well as an opened state of the membrane valve arrangement, **characterised in that** the membrane film (MF) is designed in one piece with the contact surface (AF) and that both the membrane film (MF) and also the contact surface (AF) have ferromagnetic properties, wherein for both the membrane film (MF) and/or the contact surface (AF) the ferromagnetic property is simultaneously a permanent magnetic property.

2. Domestic appliance according to claim 1, **characterised in that** the membrane film (MF) is an inherently flexible membrane film (MF).

3. Domestic appliance according to one of the preceding claims, **characterised in that**, in a case where both the membrane film (MF) and also the contact surface (AF) have the permanent magnetic property, in the sealed state of the membrane valve arrangement the magnetic north poles of the contact surface (AF) are either opposite the magnetic south poles of the membrane film (MF) or the magnetic north poles of the membrane film (MF).

4. Domestic appliance according to one of the preceding claims, **characterised in that** the membrane valve arrangement furthermore has a coil (Sp) to which an electrical current can be applied, which is arranged such that the magnetic field generated by it in the energised state magnetically influences the membrane film (MF) and the contact surface (AF).

5. Domestic appliance according to one of the preceding claims, **characterised in that** the membrane valve arrangement furthermore has either an electromagnetic surface element (FE) or a ferromagnetic surface element (FE), in particular a permanent magnetic surface element (FE), which is arranged on a side of the contact surface (AF) facing away from the membrane film (MF), which is connected at least indirectly to the contact surface (AF) and which extends along the contact surface (AF) at a given angle (α) away from the contact surface (AF).

6. Domestic appliance according to claim 5, **characterised in that** the at least indirect connection of surface element (FE) and contact surface (AF) is arranged in the region (SB) acting like a hinge.

7. Domestic appliance according to claim 5, **characterised in that** the at least indirect connection of surface element (FE) and contact surface (AF) is arranged in a region in opposition to the region (SB) acting like a hinge.

8. Domestic appliance according to one of the preceding claims, **characterised in that** the ferromagnetic property of the contact surface (AF) and/or membrane film (MF) and/or ferromagnetic surface element (FE) is achieved by incorporating ferromagnetic particles into an otherwise non-ferromagnetic material.

9. Domestic appliance according to claim 8, **characterised in that** the spatial concentration of the ferromagnetic particles increases in a linear and/or non-linear manner laterally from one end in the direction towards the other end of the contact surface (AF) and/or the membrane film (MF) and/or the ferromagnetic surface element (FE).

10. Domestic appliance according to one of the preceding claims, **characterised in that** the membrane valve arrangement is arranged in a housing (G), which has an inlet (Z) and an outlet (A) for a liquid or gaseous medium or for a medium consisting of solid particles.

11. Domestic appliance according to one of the preceding claims, **characterised in that** the membrane valve arrangement is used as a relief valve, as a non-return valve or as a flow rate limiting valve.

12. Domestic appliance according to one of the preceding claims, **characterised in that** the domestic appliance is embodied as a washing machine or a wash-dryer and comprises a tub (L) and a pump (P) for emptying the tub (L), wherein the tub (L) keeps the membrane valve arrangement with the contact surface (AF) and the membrane film (MF) closed until it is emptied, due to the reigning magnetic force of attraction.

13. Domestic appliance according to one of the preceding claims, **characterised in that** the domestic appliance is embodied as a washing machine or a wash-dryer-combination, comprising a receptable () for collecting lint containing fluid, extracted during a drying process, a pump connected to the receptable (B) via an inlet (Z), and another collecting receptable, wherein the membrane valve arrangement is provided at the receptable, which keeps the receptable closed due to the magnetic force relations, and which opens the receptable (B) in order to abruptly drain the fluid contained therein into the other collecting receptable when the pump enforces a higher pressure via the inlet (Z) onto the fluid and said pressure reaches a given pressure value.

## Revendications

1. Appareil ménager, en particulier sous la forme d'un lave-linge, d'un sèche-linge, d'un combiné lave-linge/sèche-linge ou d'un lave-vaisselle, qui présente un ensemble robinet à membrane avec une feuille de membrane (MF) et avec une face d'appui (AF) pour la feuille de membrane (MF), dans lequel la feuille de membrane (MF) et la face d'appui (AF) sont réalisées sous forme pivotante l'une par rapport à l'autre autour d'une région (SB) opérant à la manière d'une charnière de l'ensemble robinet à membrane, de telle manière qu'elles puissent occuper aussi bien un état étanche qu'un état ouvert de l'ensemble robinet à membrane, **caractérisé en ce que** la feuille de membrane (MF) est réalisée en une seule pièce avec la face d'appui (AF) et **en ce qu'**aussi bien la feuille de membrane (MF) que la face d'appui (AF) présentent des propriétés ferromagnétiques, dans lequel pour la feuille de membrane (MF) et/ou pour la face d'appui (AF) la propriété ferromagnétique est en même temps une propriété magnétique permanente.

2. Appareil ménager selon la revendication 1, **caractérisé en ce que** la feuille de membrane (MF) est une feuille de membrane flexible par nature (MF).

3. Appareil ménager selon l'une quelconque des revendications précédentes, **caractérisé en ce que** dans un cas où aussi bien la feuille de membrane (MF) que la face d'appui (AF) présentent la propriété magnétique permanente, dans l'état étanche de l'ensemble robinet à membrane, soit les pôles magnétiques Sud de la feuille de membrane (MF) font face aux pôles magnétiques Nord de la face d'appui (AF) soit les pôles magnétiques Nord de la feuille de membrane (MF) leur font face.

4. Appareil ménager selon l'une quelconque des revendications précédentes, **caractérisé en ce que** l'ensemble robinet à membrane présente en outre une bobine (Sp) pouvant être alimentée avec un courant électrique, qui est disposée de telle manière que le champ magnétique produit par celle-ci à l'état excité exerce une influence magnétique sur la feuille de membrane (MF) et la face d'appui (AF).

5. Appareil ménager selon l'une quelconque des revendications précédentes, **caractérisé en ce que** l'ensemble robinet à membrane présente en outre soit un élément plat électromagnétique (FE) soit un élément plat ferromagnétique (FE), en particulier un élément plat magnétique permanent (FE), qui est disposé sur un côté de la face d'appui (AF) détourné de la feuille de membrane (MF), qui est relié au moins indirectement à la face d'appui (AF) et qui s'étend le long de la face d'appui (AF) sous un angle donné (α) à partir de la face d'appui (AF).

6. Appareil ménager selon la revendication 5, **caractérisé en ce que** la liaison au moins indirecte de l'élément plat (FE) avec la face d'appui (AF) est disposée dans la région (SB) opérant à la manière d'une charnière.

7. Appareil ménager selon la revendication 5, **caractérisé en ce que** la liaison au moins indirecte de l'élément plat (FE) avec la face d'appui (AF) est disposée dans une région opposée à la région (SB) opérant à la manière d'une charnière.

8. Appareil ménager selon l'une quelconque des revendications précédentes, **caractérisé en ce que** la propriété ferromagnétique de la face d'appui (AF) et/ou de la feuille de membrane (MF) et/ou de l'élément plat ferromagnétique (FE) est réalisée par incorporation de particules ferromagnétiques dans un matériau par ailleurs non ferromagnétique.

9. Appareil ménager selon la revendication 8, **caractérisé en ce que** les particules ferromagnétiques présentent une concentration spatiale qui augmente de façon linéaire et/ou non linéaire latéralement depuis une extrémité en direction de l'autre extrémité de la face d'appui (AF) et/ou de la feuille de membrane (MF) et/ou de l'élément plat ferromagnétique (FE).

10. Appareil ménager selon l'une quelconque des revendications précédentes, **caractérisé en ce que** l'ensemble robinet à membrane est disposé dans un boîtier (G), qui présente une arrivée (Z) et une évacuation (A) pour un milieu liquide ou gazeux ou pour un milieu composé de particules solides.

11. Appareil ménager selon l'une quelconque des revendications précédentes, **caractérisé en ce que** l'ensemble robinet à membrane est utilisé comme soupape de surpression, comme clapet anti-retour ou comme soupape de limitation de débit.

12. Appareil ménager selon l'une quelconque des revendications précédentes, **caractérisé en ce que** l'appareil ménager est réalisé sous forme de lave-linge ou de combiné lave-linge/sèche-linge et comprend un réservoir à lessive (L) et une pompe (P) pour vider le réservoir à lessive (L), dans lequel le réservoir à lessive (L) maintient fermé, jusqu'à la vidange de celui-ci, l'ensemble robinet à membrane avec la face d'appui (AF) et la feuille de membrane (MF) en raison de la force d'attraction magnétique qui y règne.

13. Appareil ménager selon l'une quelconque des revendications précédentes, **caractérisé en ce que** l'appareil ménager est réalisé sous forme de sèche-linge ou de combiné lave-linge/sèche-linge, comprend un récipient (B) destiné à récolter le liquide extrait pendant une opération de séchage, qui contient des peluches, une pompe raccordée au récipient (B) par une arrivée (Z) et un autre récipient de collecte (S), dans lequel l'ensemble robinet à membrane est prévu sur le récipient, maintient le récipient fermé en raison des rapports de forces magnétiques et ouvre le récipient (B), afin de vider le liquide qu'il contient par à-coups dans l'autre récipient de collecte, lorsque la pompe exerce par l'arrivée (Z) une pression plus élevée sur le liquide et que cette pression atteint une valeur de pression donnée.
